(19) Europäisches Patentamt
European Patent Office
Office européen des brevets

(11) Publication number: 0 049 172
B1

(12) EUROPEAN PATENT SPECIFICATION

(45) Date of publication of patent specification: 08.08.84

(51) Int. Cl.³: C 22 B 11/04, C 22 B 3/00, C 01 G 7/00

(21) Application number: 81304538.2

(22) Date of filing: 01.10.81

# (54) Gold recovery process.

(30) Priority: 01.10.80 GB 8031562
18.09.81 GB 8128283

(43) Date of publication of application:
07.04.82 Bulletin 82/14

(45) Publication of the grant of the patent:
08.08.84 Bulletin 84/32

(84) Designated Contracting States:
BE DE FR

(56) References cited:
AU - B - 475 788
FR - A - 2 222 446
GB - A - 16 898
GB - A - 1 310 011
GB - A - 1 376 888
US - A - 1 358 096
US - A - 1 375 441
US - A - 3 920 403
US - A - 3 970 737

(73) Proprietor: Hunter, William
Prebend House Hunter Street
Buckingham, MK18 1DQ (GB)

(72) Inventor: Hunter, William
Prebend House Hunter Street
Buckingham, MK18 1DQ (GB)

(74) Representative: MacLeod, Malcolm et al,
c/o The British Petroleum Company plc Patents
Division Chertsey Road
Sunbury-on-Thames Middlesex, TW16 7LN (GB)

(56) References cited:
CHEMICAL ABSTRACTS, vol. 95, 19th October 1981, page 69, no. 134300t Columbus, Ohio, U.S.A.
CHEMICAL ABSTRACTS, vol. 94, 23rd February 1981, page 225, no. 50840k Columbus, Ohio, U.S.A. N.V. MAKHNYR et al.: "Possible electrolytic extraction of precious metals from cyanide solutions on carbon-graphite materials"

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 049 172 B1

## Description

This invention relates to a process for the recovery of precious metals, e.g. gold, from solution.

Ore bodies or other materials containing gold can be leached with dilute cyanide solutions to obtain a liquor containing dissolved gold compound(s). It is known that such a liquor can also contain dissolved compound(s) of other precious metal(s), e.g. silver and/or platinum group metals such as palladium.

One known process for recovering gold from this material comprises adding at least one base metal, e.g. zinc, to the liquor to precipitate gold as metal particles. Particles of other precious metal(s) can also be precipitated with the gold particles.

Another known process for recovering gold from the liquor comprises an adsorption stage and a stripping stage. In the adsorption stage, particles of activated carbon (i.e. granular activated carbon) are connected with the liquor so that dissolved compound(s) of gold are adsorbed onto those particles. Dissolved compound(s) of other precious metal(s) can also be adsorbed by those particles. In the stripping stage, the resultant particles of carbon loaded with adsorbed gold compound(s) and any adsorbed compound(s) of other precious metal(s) are treated with a liquid stripping composition comprising cyanide(s), to give a solution containing dissolved gold compound(s), and optionally dissolved compound(s) of other precious metal(s). The stripping composition may be a hot, dilute aqueous mixture of sodium hydroxide and sodium cyanide.

The adsorption and stripping stages can be carried out in columns or vats and are slow. Also, because of the physical nature of the granular particles of activated carbon, those stages can be labour intensive. A further problem is that pieces of carbon can break off from the bulk of activated carbon and cause gold loss in the adsorption stage.

The granular activated carbon used in the adsorption stage is often prepared from wood or coconut husks.

The particles of carbon obtained from the stripping stage can be reactivated by heating them, e.g. at 650° to 750°C, usually in the absence of air. They may then be re-used in the adsorption stage.

The solution obtained from the stripping stage can be further processed, e.g. in the electrolytic stage using a suitable cathode, e.g. steel, on to which metallic gold is deposited and from which it may be recovered.

According to the present invention there is provided a process for the recovery of a precious metal from solution, particularly gold, by adsorbing a dissolved compound of the precious metal from the solution onto activated carbon wherein the activated carbon is in the form of a body comprising fibres of activated carbon.

The gold may be associated with one or more additional precious metals.

The precious metal solution may be obtained by leaching an ore or similar material.

The fibrous body can have any suitable structure, e.g. it may be woven or knitted or be in the form of a felt, mesh or pad. It is preferably in the form of a cloth consisting of fibres containing substantially 100% by weight of activated carbon.

The precious metal may be recovered by subsequently treating the fibrous body containing adsorbed precious metal with a liquid stripping composition to give a solution containing dissolved precious metal. The metal can be recovered from this solution by conventional work-up techniques.

The stripping composition may comprise at least one solute and/or at least one solvent. Preferably the stripping composition contains a cyanide. An aqueous solution of sodium hydroxide and sodium cyanide forms a particularly suitable stripping composition.

Alternatively, the precious metal may be recovered by subjecting the fibrous body containing adsorbed precious metal to electrolysis. The loaded fibrous body can conduct electricity and be used as an anode from which the precious metal can be removed by electrolysis and deposited onto any suitable cathode. At high current densities, however, the precious metal may not plate onto the cathode but may be recovered in the form of a solid powder.

In processes of the prior art involving the use of beds of granulated active carbon, the beds were not suitable for use as anodes. Thus the adsorbed gold could not be directly recovered by electrolysis and additional treatment stages were necessary.

In one modification of a process according to the present invention an activated carbon fibre cloth may be mounted within a filter press for contact with the precious metal solution. This enables the cloth to be subsequently treated in situ with the stripping composition.

According to another modification, the cloth may be used in the form of a belt, preferably an endless belt, which moves from the adsorption stage to the recovery stage and returns to the adsorption stage and so on. This configuration is applicable both to solvent stripping and electrolytic recovery. An endless belt permits the operation of a continuous process.

If desired, additional strength can be conferred on an activated carbon fibre cloth by bonding it to a suitable material such as a porous natural or synthetic textile.

A cloth of fibres of activated carbon termed "Charcoal Cloth" is a known material available from Charcoal Cloth Limited. It is manufactured by a continuous process developed and patented by the Chemical Defence Establishment of the British Government. The process permits the manufacture of a flexible fabric consisting of highly adsorbent fibres which are substantially 100% by weight activated carbon. Reference is made to British Patents 1310011 and 1376888 in connection with this fabric. One example of the preparation of a Charcoal Cloth is a process which involves dipping rayon cloth in chemicals, drying the dipped cloth, carbonising the dried cloth at 350°C and heating the carbonised cloth at 900°C to activate it. When a cloth of fibres of activated carbon is contacted with a solution of a precious metal, the cloth presents greater surface area to the solution per unit weight of carbon, and considerably higher quantities of precious metal, e.g. gold compound(s) can be adsorbed, contrasted with the known adsorption using particles of activated carbon. A further advantage of the cloth is that it will require less handling than particles of activated carbon, and there will be a considerable reduction in pieces of carbon breaking away from the main bulk of carbon. Indeed, the nature of the cloth can act as a trap to retain at least some of those pieces.

In a typical mine leaching operation, the present invention enables the adsorptive stages and stripping stages to take place more quickly and thereby provide better overall efficiency.

The body of activated carbon fibres can be periodically reactivated by heating to a suitable temperature in an oven e.g. 250°C, to remove surface contamination and regenerate adsorptive activity.

The invention is illustrated with reference to Figures 1—4 of the accompanying drawings wherein Figure 1 is a schematic representation of a continuous process according to the invention and Figures 2—4 are graphs in which the performance of activated carbon cloths is compared with that of granular activated carbon.

With reference to Figure 1, an endless woven web W of a Charcoal Cloth (see above) extends in a path contacting a variable drive roller 1 and rollers 2 to 14. Rollers 2, 4, 6, 7, 8, 9, 10, 11, 12, 13, 14 are plastics (e.g. nylon) rollers. Rollers 3 and 5 are positively charged. A first portion of the web's path is through Chamber A, containing any suitable cathode 15, e.g. steel, and an electrolyte. Chamber A is used for subjecting to electrolysis the Charcoal Cloth when loaded with an adsorbed gold compound, the metallic gold being deposited onto cathode 15. Chamber B contains an aqueous wash bath for the web. Chamber C contains a liquor obtained by treating a gold containing ore with a leaching composition comprising sodium hydroxide, sodium cyanide and water. Chamber D contains a further aqueous wash bath for the web. Any chamber can be replaced by a plurality of chambers, to allow plural treatments. The web can pass through an optional oven 16 between chambers B and C, which reactivates the web by heating.

Example 1
Equilibrium adsorption trials—gold

The adsorption capacity of two activated carbon fibre cloths was compared with granular activated carbon.

The cloths were purchased from Charcoal Cloth Limited and had the following weights per unit area:

| | |
|---|---|
| Cloth B | 12.4 mg/cm$^2$ |
| Cloth D | 12.9 mg/cm$^2$ (Used in Ex. 2) |
| Cloth F | 14.5 mg/cm$^2$ |

Cloth discs of 2 cm diameter were used in the tests.

A number of gold solutions were prepared from pure gold potassium cyanide at strengths calculated to produce equilibrium concentrations in the range 0 to 75 ppm. gold.

Discs of Cloths B and F were placed in contact with the gold solutions in plastic containers and mechanically agitated for 48 hours. Samples of granular activated charcoal were similarly treated.

The results depicted graphically in the accompanying Figure 2 were obtained. These equilibrium adsorption isotherms show that at any particular equilibrium gold concentration, the uptake of gold achieved by the cloths is greater than that by the granular material. This effect is particularly marked in the low concentration ranges which are most likely to be found in industrial applications.

Example 2
Kinetic trials—gold

As in Example 1, gold solutions of various concentrations were prepared from potassium gold cyanide.

700 ml of start solutions were used and pieces of Charcoal Cloths B, D and F weighing between 0.2 and 0.5 g were held in a sintered glass crucible. The temperature was held at 21°C throughout and the pH at 10.5.

The gold solution was circulated through the cloth and 5 ml samples were withdrawn at intervals of 5 minutes. Gold concentrations were determined by atomic absorption spectra.

Granulated activated charcoal was similarly treated.

The results shown graphically in the accompanying Figure 3 were obtained.

The rate of adsorption using cloth samples was extremely fast. Steady state conditions were reached after 20—25 minutes.

With the granular carbon, much less adsorption and a much slower adsorption rate were found. In order to magnify these effects a test was carried out in which a relatively large sample of granular carbon was used, 2.56g. This took about 2½ hours to reach equilibrium.

Because the adsorption rate of the cloth is greater it follows that a lesser quantity of activated carbon in this form is required to be in contact with the solution at any given time.

Example 3
Kinetic trials—silver

Example 2 was repeated with a sample of Cloth B and granular charcoal, using solutions obtained from silver potassium cyanide instead of gold.

The results are set out graphically in the accompanying Figure 4 and prove similar to Example 2 in establishing the superiority of the cloth. This adsorbed more silver than the granular material and reached equilibrium more quickly, again in about 20—25 minutes as compared with 2¼—2½ hours.

Example 4
Electrolytic recovery—gold

A sample of Charcoal Cloth was contacted for 2 hours with a solution of gold cyanide. At the end of this period the cloth had adsorbed 55.20 mg gold.

It was then placed in an electrolyte containing 1.0% by wt NaOH and 0.1% NaCN to form an anode, the cathode being a preweighed titanium electrode. A current was passed for 45 minutes equivalent to a current density on the carbon cloth anode of 10 amps/ft$^2$ (about 100 amps/m$^2$).

At the end of the trial, the electrolyte was found to contain 0.45 mg gold and 35.9 mg gold had deposited onto the cathode.

This experiment shows that gold can be removed from the cloth at low current densities and deposited electrolytically onto a suitable cathode.

Example 5
Electrolytic recovery—gold—high current density

A sample of Charcoal Cloth was contacted for 2 hours with a solution of gold cyanide. At the end of this period the cloth had adsorbed 28.05 mg gold.

It was then placed in an electrolyte containing 1.0% by wt NaOH and 0.1% NaCN. A titanium cathode was also placed in the electrolyte and the cloth (the anode) and the cathode were electrically connected to a DC power source.

A current was passed through the system equivalent to a current density on the carbon anode of 100 amps/ft$^2$ (about 1000 amps/m$^2$) for 5 minutes.

No gold could be detected on the cathode but 4.18 mg gold were found to be dissolved in the electrolyte and a fine powder was formed which, when filtered off and redissolved, was found to contain 1 mg gold.

This experiment shows that at relatively high current densities, gold can be swiftly removed from the cloth.

**Claims**

1. A process for the recovery of a precious metal from solution by adsorbing a dissolved compound of the precious metal from the solution onto activated carbon, characterised by the fact that the activated carbon is in the form of a body comprising fibres of activated carbon.

2. A process according to Claim 1 wherein the precious metal is gold.

3. A process according to Claim 2 wherein the gold is an admixture with another precious metal.

4. A process according to any of the preceding claims wherein the precious metal solution is obtained by leaching an ore.

5. A process according to any of the preceding claims wherein the fibrous body is in the form of a carbon fibre cloth consisting of fibres containing substantially 100% by weight of activated carbon.

6. A process according to Claim 5 wherein the activated carbon fibre cloth is mounted in a filter press.

7. A process according to Claim 5 wherein the activated carbon fibre cloth is in the form of a belt.

8. A process according to any of the preceding claims wherein the fibrous body of activated carbon containing absorbed precious metal is subsequently treated with a liquid stripping composition to give a solution containing dissolved precious metal to recover the precious metal.

9. A process according to any of Claims 1 to 7 wherein the fibrous body of activated carbon containing adsorbed precious metal subsequently forms the anode in an electrolytic process to recover the precious metal.

10. A process according to Claim 7 or to Claim 8 or 9 as appended to Claim 7 wherein the belt moves from the adsorption stage to the recovery stage and returns to the adsorption stage.

**Patentansprüche**

1. Verfahren zur Gewinnung eines Edelmetalls aus Lösung durch Adsorption einer gelösten Verbindung des Edelmetalls aus der Lösung an Aktivkohle, dadurch gekennzeichnet, daß die Aktivkohle in Form eines Fasern aus aktiviertem Kohlenstoff umfassenden Körpers vorliegt.

2. Verfahren nach Anspruch 1, dadurch gekennzeichnet, daß das Edelmetall Gold ist.

3. Verfahren nach Anspruch 2, dadurch gekennzeichnet, daß das Gold im Gemisch mit einem anderen Edelmetall vorliegt.

4. Verfahren nach irgendeinem der vorhergehenden Ansprüche, dadurch gekennzeichnet, daß die Edelmetall-Lösung durch Auslaugen eines Erzes gewonnen ist.

5. Verfahren nach irgendeinem der vorhergehenden Ansprüche, dadurch gekennzeichnet daß der faserhaltige Körper in Form eines Gewebetuchs aus Kohlenstoff-Fasern vorliegt, das aus im wesentlichen 100 Gew.-%

aktivierten Kohlenstoff enthaltenden Fasern besteht.

6. Verfahren nach Anspruch 5, dadurch gekennzeichnet, daß das Gewebetuch aus Kohlenstoff-Fasern in einer Filterpresse eingebaut ist.

7. Verfahren nach Anspruch 5, dadurch gekennzeichnet, daß das Gewebetuch aus Kohlenstoff-Fasern in Form eines Bandes vorliegt.

8. Verfahren nach irgendeinem der vorhergehenden Ansprüche, dadurch gekennzeichnet, daß der adsorbiertes Edelmetall enthaltende faserhaltige Körper aus aktiviertem Kohlenstoff anschließend mit einer flüssigen Abstreifmasse behandelt wird, so daß eine gelöstes Edelmetall enthaltende Lösung zur Gewinnung des Edelmetalls erhalten wird.

9. Verfahren nach Anspruch 1 bis 7, dadurch gekennzeichnet, daß der adsorbiertes Edelmetall enthaltende faserhaltige Körper aus aktiviertem Kohlenstoff anschließend die Anode in einem electrolytischen Verfahren zur Gewinnung des Edelmetalls bildet.

10. Verfahren nach Anspruch 7 oder Anspruch 8 oder 9, wie sie Anspruch 7 beigefugt sind, dadurch gekennzeichnet, daß sich das Band von der Adsorptionsstufe zu der Gewinnungsstufe bewegt und zu der Adsorptionsstufe zurükehrt.

**Revendications**

1. Procédé pour obtenir un métal précieux à partir d'une solution en adsorbant un composé dissous du métal précieux à partir de la solution sur du charbon activé, caractérisé en ce que le charbon activé présente la forme d'une corps comprenent des fibres de charbon activé.

2. Procédé selon la revendication 1, dans lequel le métal précieux est l'or.

3. Procédé selon la revendication 2, dans lequel l'or est mélangé avec un autre métal précieux.

4. Procédé selon l'une des revendications précédentes, caractérisé en ce que la solution de métal précieux est obtenue par lixiviation d'un minerai.

5. Procédé selon l'une des revendications précédentes, dans lequel le corps fibreux présente la forme d'une tissue de fibres de carbone consistant en des fibres contenant sensiblement 100% en poids de charbon activé.

6. Procédé selon la revendication 5, dans lequel le tissu en fibres de charbon activé est moné dans un filtre-presse.

7. Procédé selon la revendication 5, dans lequel le tissu en fibres de charbon activé présente la forme d'une courroie.

8. Procédé selon l'une des revendications précédentes, dans lequel le corps fibreux de charbon activé contenant le métal précieux adsorbé est subséquemment traité avec une composition liquide de décapage pour donner une solution contenant le métal précieux dissous pour la récupération du métal précieux.

9. Procédé selon l'une des revendications 1 à 7, dans lequel le corps fibreux de charbon activé contenant le métal précieux adsorbé forme subséquemment l'anode d'un processus électrolytique pour la récupération du métal précieux.

10. Procédé selon la revendication 7 ou selon l'une des revendications 8 ou 9 rattachées à la revendication 7, dans lequel la courroie se déplace de l'étape d'adsorption vers l'étape de récupération, puis retourne vers l'étage d'adsorption.

FIG.1

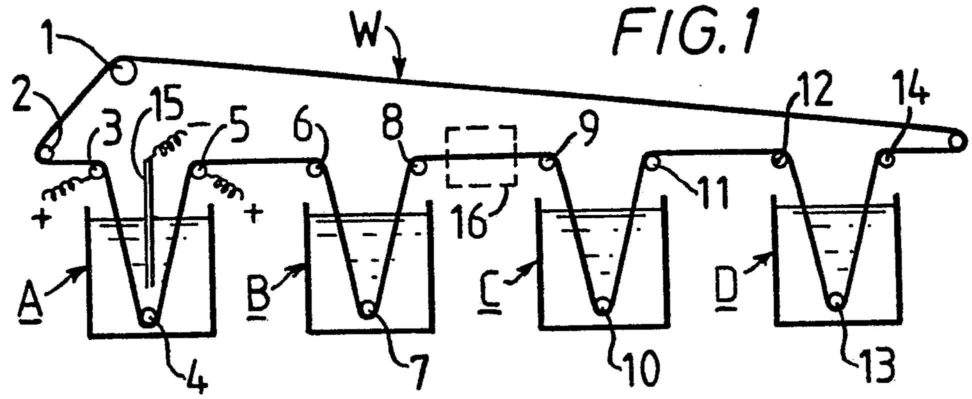
W
1
2
3
15
5
6
8
9
12
14
11
16
A
B
C
D
4
7
10
13
+
+

FIG. 2

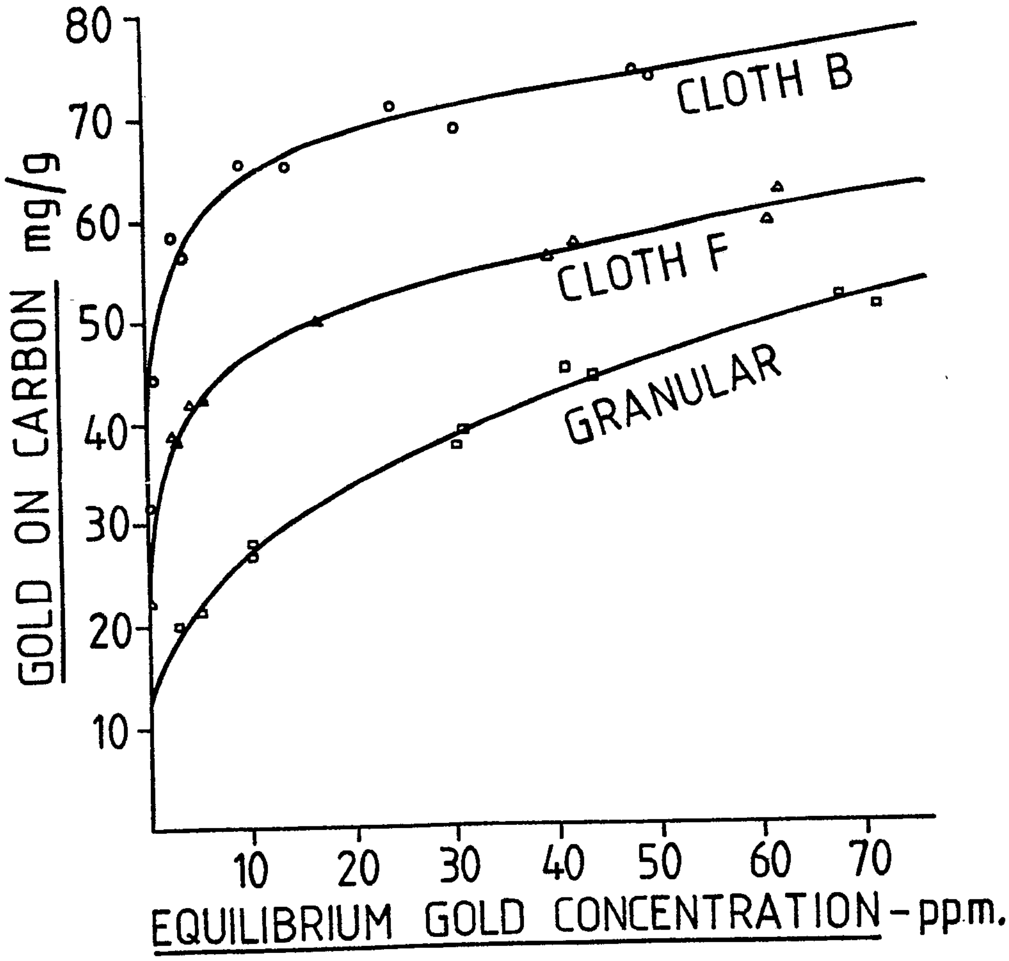
GOLD ON CARBON mg/g
80
70
60
50
40
30
20
10
CLOTH B
CLOTH F
GRANULAR
10
20
30
40
50
60
70
EQUILIBRIUM GOLD CONCENTRATION - ppm.

FIG.3

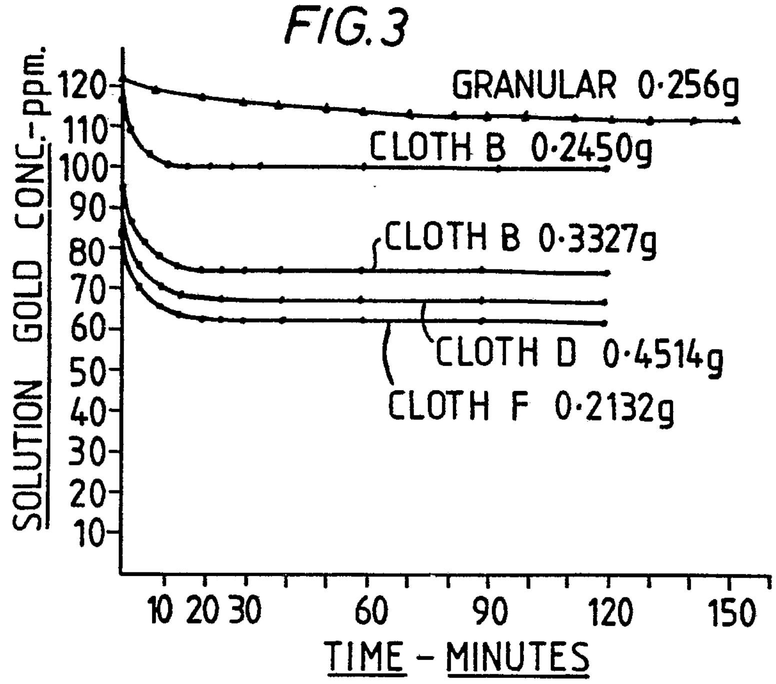
SOLUTION GOLD CONC.-ppm.
120
110
100
90
80
70
60
50
40
30
20
10
GRANULAR 0·256g
CLOTH B 0·2450g
CLOTH B 0·3327g
CLOTH D 0·4514g
CLOTH F 0·2132g
10 20 30
60
90
120
150
TIME – MINUTES

FIG. 4

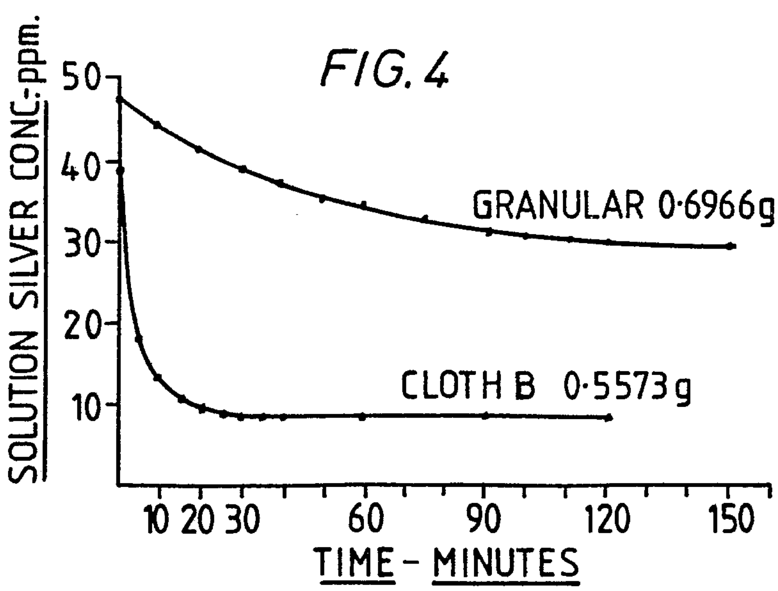
SOLUTION SILVER CONC.-ppm.
50
40
30
20
10
GRANULAR 0·6966g
CLOTH B 0·5573g
10 20 30
60
90
120
150
TIME – MINUTES